# EUROPEAN PATENT APPLICATION

(11) **EP 0 657 581 A1**
(43) Date of publication of application: **14.06.1995**
(21) Application number: 94308268.5
(22) Date of filing: 09.11.1994
(51) Int. Cl.: D21J 7/00

(54) **Pulp mouldings**

(30) Priority: 09.11.1993 GB 9323036; 09.11.1993 GB 9323037; 22.12.1993 GB 9326152; 11.05.1994 GB 9409386
(71) Applicant: Bowater plc, London SW1X 7NN (GB)
(72) Inventor: Cook, John Edward, Harrogate, North Yorkshire HG2 0AZ (GB); Shepheard, Paul, March, Cambridgeshire PE15 8NH (GB); Williams, Colin, Bury St. Edmunds, Suffolk IP33 2RB (GB)
(74) Representative: Wain, Christopher Paul

(57) **Abstract**

A pulp moulding (100) which is used to package an article, e.g. an egg (102), has a region (110) which does not initially contact the article (102) and a region (103) which does initially contact the article. Region (103) is of a thickness different from that of region (110).

## Description

This invention relates generally to pulp mouldings and their manufacture.

It is known to mould articles from paper pulp and the like. For example, egg cartons and other packaging items are commonly made in this way. In recent times, there has been a move to replace conventional expanded polystyrene and other plastics packaging items by corresponding pulp products, both to achieve economies and for ecological reasons. However, current manufacturing techniques for pulp products, whilst perfectly satisfactory for fairly crude items such as egg boxes, do not easily permit the production of more sophisticated items.

In general, pulp products are made by providing a mesh mould, feeding an aqueous pulp to one side of the mould, and applying a vacuum to the other side of the mould to draw water through the mesh, thus leaving the solids (fibres) deposited on the mesh. The wet moulded solids are then removed and dried to form the moulded product. The mesh moulds for these processes are largely hand-made and, especially for complex shapes, can take a long time to make. In one typical procedure, individual pieces of wire mesh are shaped and located on a support member, and joined to adjacent pieces to build up a complete mould.

It will be appreciated that it is very difficult by these conventional procedures to make anything but relatively simple moulded products. Furthermore, it is difficult if not impossible to make very accurately dimensioned and shaped products. These limitations of the production process result in severe limitations on the sort of products which can be made by this technique.

We have now found that it is possible to make pulp mouldings which are much more sophisticated than hitherto and, in particular, mouldings in which the thickness can be controlled to provide variations in the moulding. This has not been possible in a controlled way in prior known processes, and the mouldings of the present invent ion are novel and form one aspect of the invention.

According to a first aspect of the present invention, there is provided a pulp moulding for packaging an article, the moulding having a surface for facing said article, the surface consisting of one or more first areas to make initial contact with the article, and one or more second areas out of initial contact with the article, and where in at least one of said first areas comprises a region of different thickness from at least one of said second areas.

The ability to provide deliberate and controlled variations in thickness in the mouldings gives rise to a number of advantages. For example, mouldings of more sophisticated design can be made in one piece, with one or more weakened areas for example to provide for breakage under extreme stress. Cost savings can be made in the amounts of material used, and overall the new mouldings significantly widen the areas in which such products can be used.

In the mouldings of the invention, the surface facing the article to be packaged has two types of surface area, namely the first areas which are shaped to contact the article as it is packaged therein, and the second areas which are out of contact with the article initially. These second areas may never contact the article during normal use of the moulding, or some second areas may come into contact with the article if the package is subjected to extreme stress. According to a feature of the invention, in the mouldings of the invention there will be at least one region of the first areas which is of different thickness from at least one region of the second areas.

The first area region may be thicker or thinner than the second area region. Usually, the second area region will be thinner to provide a weak point for rupture in emergency, but the second area region can be of greater thickness for example to provide strength.

The variations in thickness need not only be between regions of the first and second areas. They can also occur within the first areas and/or within the second areas, as desired. This gives great flexibility of design. The variations in thickness will usually be at least 2:1, but smaller differences can be used if desired.

The pulp mouldings of the invention are used for packaging articles, i.e. to protect articles against damage such as during transit and/or storage. The mouldings have first area surfaces for contacting the article, and non-contact areas spaced from the article by an amount to allow for absorbtion of any energy of impact to avoid damage to the article. The differences in thickness between different regions of the mouldings of the invention provides a means of energy absorbtion.

The thickness variations can also be used to accommodate variations in size in the articles to be packaged. For example, in the case of egg boxes, differently sized eggs can be packaged by providing thin contact areas able to flex to the shape of differently sized eggs. In another arrangement of the invention thin regions can be provided in the moulding to act as tear-off regions, to permit one (or more) parts of the moulding to be separated from the remainder. For this purpose, the thickness ratio can be 5:1 or more (thick: thin).

It is a preferred feature of the mouldings of the invention that the moulding thickness is at constant moulding density. Thus, the thinner regions are not produced by pressing or the like. In fact, the moulding is produced in one moulding step, with the thickness variations accurately built in during production. This is in contrast to some prior art mouldings, where minor variations in thickness can sometimes be introduced by after-pressing. The thickness variations of the present invention are not made by after-pressing, which is an expensive and undesirable extra step in a moulding process.

In many cases, the thickness variations will appear as a pattern in the product.

The pulp mouldings of the present invention are made essentially by the method described, i.e. by feeding aqueous pulp to one side of a mesh mould and drawing water through the mesh. However, we have made a number of improvements in this known process, as a result of which variable thickness can be achieved, optionally together with other desirable features.

The mesh mould can comprise one or more mesh members mounted on a support or, in accordance with a feature of the present invention, the mesh member and support can be integrally formed. Where mesh members are mounted on a support, it is preferred that there is no space between the mesh members and the underlying support, i.e. the mesh members are in intimate contact with the support structure, to reduce or prevent any lateral water flow below the mesh.

The support structure comprises a plurality of channels to conduct away the water drawn through the mesh. In accordance with a feature of the invention, the arrangement of flow channels is such as to cause pulp thickness variations in the moulding. Thus, a thicker region of moulding will be formed where there are (or are larger) flow channels in the support, and thinner regions will form where there are fewer (or smaller) flow channels in the support. It is, of course, possible to form supports with a uniform distribution of flow channels therein, and then to close off or restrict one or more of the channels to provide the thickness variations desired in the pulp moulding. The meshes and support members can be made separately and assembled, or (as is described later) they can be made as a single integral unit.

The size of the apertures in the mesh member can be constant (eg. where variable water flow channels are provided in the supports), or the mesh apertures can be of varying size to give the desired thickness variations in the pulp moulding. Where reliance is placed on varying mesh sizes to achieve thickness variations, it is not essential for the mesh to be in intimate contact with the support.

According to a second aspect of the present invention, we have found that meshes for use in making pulp mouldings can be made by the technique known as stereolithography (hereinafter abbreviated to "SLA"). In particular, we have found that mesh structures of both simple and of highly complex design can be made in this way, and thus very sophisticated and highly accurately dimensioned moulds can be made, thus enabling correspondingly sophisticated and accurately dimensioned moulded articles to be produced.

In the SLA process, an article is built up of polymerised resin in a bath of UV-sensitive unpolymerised resin, by directing laser energy into the bath to cause polymerisation at points in the resin and so build up a polymerised structure. The technique is complex and the laser is computer-controlled. The manufacture of mesh-like structures by this process is believed to be novel.

The mesh-like structures made by SLA are composed of polymerised resin, eg. an acrylic resin. For convenience, a mesh mould for a pulp product will normally be made up of a plurality of mesh units, at least some of which being made by the SLA process. Each unit will be mounted on a suitable support (as described above) to form the mould. The units can be made of an exact size and shape to be mountable on a predetermined support to provide the exact shape required.

For some purposes, the polymerised acrylic mesh units as directly made by SLA can be utilised as such to make a mould. It is preferred, however, to make copies of the SLA-generated units in, for example, other plastics materials, metals or ceramics. These second generation mesh units can have a longer life or have other advantageous characteristics over the SLA-generated units. The accuracy of the SLA-generated units can be maintained in the second generation units which can be made by procedures well known in the art.

As described above, the wall thickness of the pulp moulding can be varied by having areas of different mesh size in the mould. This allows the production of a moulding of the invention having thicker or thinner regions, providing extra strength or deliberate weak zones of impact absorbance, for example. By SLA procedures, it is easily possible to control the mesh aperture and to provide local variations as desired. This is an important feature of the present invention.

According to a further feature of the present invention, we have found that the support members for the mesh can be advantageously made by a known technique called laminated object manufacturing (hereinafter abbreviated to LOM). By this technique, a shaped object is built up out of layers of sheet material, eg. plastic coated paper, each individually cut by a laser and adhered to adjacent layers. The laser is computer controlled and the technique allows complex three dimensional articles to be produced with high dimensional accuracy. We have found that this is an excellent way of providing a support member especially mesh members, for the SLA-derived mesh units.

The use of LOM for making a mesh support member is of general applicability and is not limited to SLA-generated meshes. Thus, in a further aspect, the invention provides a method of making a pulp moulding as defined, in which method a mesh is located on a support therefor, wherein the support is made by LOM. For further information about LOM, reference may be made to our U.K. and European Patent applications being filed on even date herewith.

According to one preferred feature of the LOM technique as used in this invention, a relatively thick paper (eg. 8 to 12 thousandths inch thickness) can advantageously be used. In this way, a stepped surface can be obtained so that, when mesh is supported thereon, lateral liquid flow paths are obtained. However, this will normally only be desirable where the mesh aperture is varying to provide the thickness variations.

Because of the ability which the present invention provides to closely control the mesh mould surface, the quality of the surface can be chosen to requirements from, for example, very smooth to a roughened appearance. In accordance with another preferred feature of the invention, both surfaces of a moulded article can be made smooth by positioning a smooth male member in the pulp adjacent the mesh surface. This member itself could comprise a mesh surface with vacuum applied thereto if desired. The member can be used to transfer the pulp moulding to the oven for drying.

Laminated paper articles produced by LOM will normally be resin treated to impart the desired chemical, water, heat and wear resistance.

The present invention enables a very wide variety of pulp mouldings to be made, in particular mouldings of articles which it has not been possible previously to produce in pulp. Further, because of the accuracy and control available, articles can now be made as pulp mouldings which would not previously have been considered as possible.

In order that the invention may be more fully understood, reference is made to the accompanying drawings, wherein:
FIG. 1 schematically illustrates the technique of SLA;
FIG. 2 shows schematically and in vertical section the production of an article by SLA;
FIG. 3A is a top plan view of one embodiment of a mesh unit made in accordance with the invention;
FIG. 3B is a sectional elevation on the line B-B of Fig. 3A. FIG. 4 schematically illustrates the technique of LOM;
FIG. 5 is a vertical section through part of an article as it is made by LOM; and
FIG. 5A shows a section of a mesh support of the invention with mesh thereon; and
FIG. 6 illustrates schematically a pulp moulding process.
FIG. 7A is a schematic vertical section through part of a prior art LOM article;
FIG. 7B is a schematic vertical section through part of a mesh support made by the process of the present invention;
FIG. 8 is a schematic vertical section through part of another mesh support made by the process of the invention;
FIG. 9 is an orthogonal view of an embodiment of a pulp moulding of the invention;
FIG. 10 is a vertical sectional view of an embodiment of pulp moulding of the invention for packaging an egg;
FIG. 11 is a top plan view of the arrangement of Fig. 10;
FIG. 12 is a sectional view of the formation of the moulding of Fig. 10;
FIG. 13 is an orthogonal view of an embodiment of packaging pulp moulding of the invention;
FIG. 14 is a plan view of the moulding process of one side face of the moulding of Fig. 13; and
FIGS. 15 and 16 are cross-sections on lines A-A and B-B respectively of parts of Fig. 14.

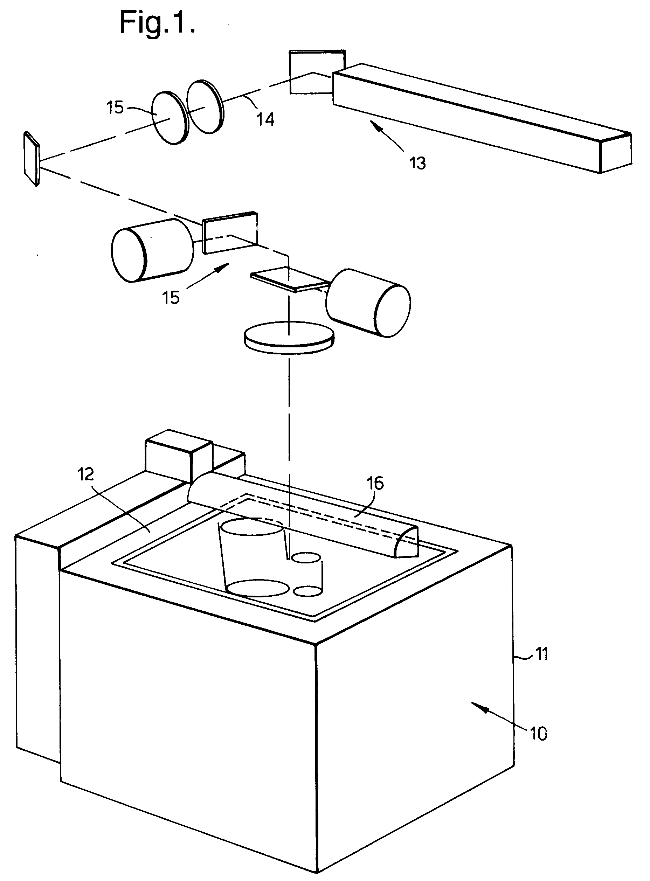

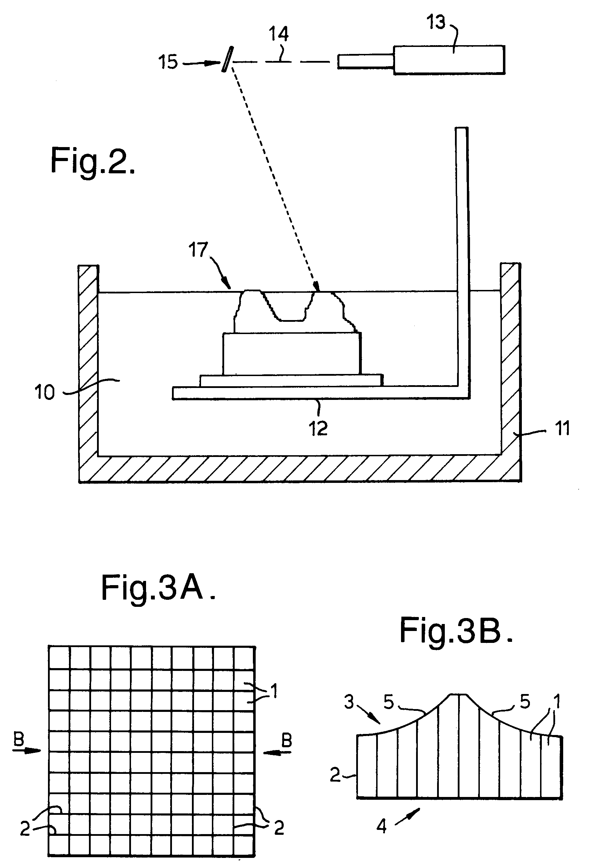

Referring to Figs. 1 and 2, UV sensitive resin 10 is in a tank 11 in which is mounted a table 12 which is vertically reciprocable. A laser 13 provides a beam 14 which is focussed by mirrors 15 etc. to be spot focussed in a horizontal plane in the liquid surface of the tank 11, and is arranged to move to traverse the whole area of the plane. The speed of movement of the beam is varied to cause polymerisation of the resin only in the desired areas of the plane. (Alternatively, the beam could be pulsed.) The plane is very thin.

After one plane has been treated, the table is moved downwards by an increment to bring fresh liquid into the plane of focus of the laser. A wiper 16 levels the surface. The beam is again caused to traverse the plane. As the process is repeated, plane by plane, there is built up a structure 17 of polymerised resin. In accordance with the present invention, the structure is of a three-dimensional mesh. Fig. 2 shows a structure ("model") being built up.

Figs. 3A and 3B illustrate a mesh unit made by the SLA technique in accordance with the invention. The unit illustrated comprises a grid of 10 x 10 through-channels (1) each bounded by thin walls (2). The unit has a top (3) and bottom (4) , the apertures (1) extending from top to bottom of the unit. The top (3) is shaped (i.e. the tops of the walls defining the channels are shaped) to the shape of the desired moulded article (see curves (5) in Fig. 3B). In use, units are mounted on a support and a vacuum applied at the bottom (4). Pulp is fed to the top (3) and liquid is drawn off though channels (1), leaving the solids residue on the shaped top (3).

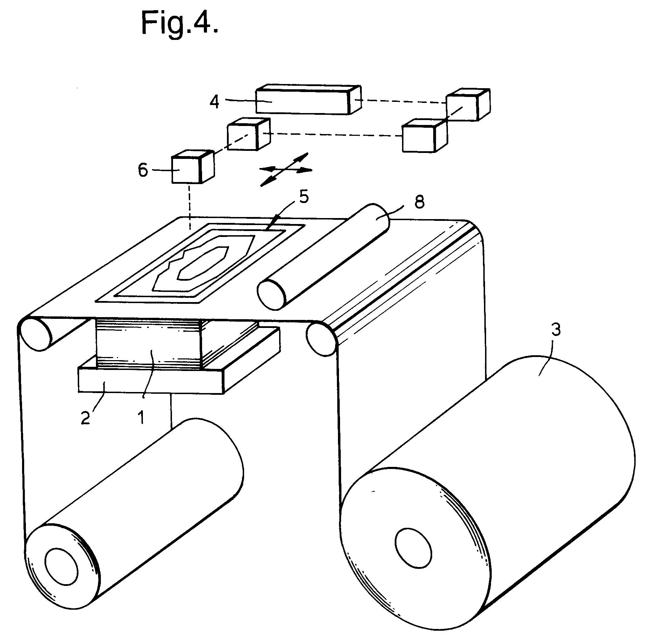

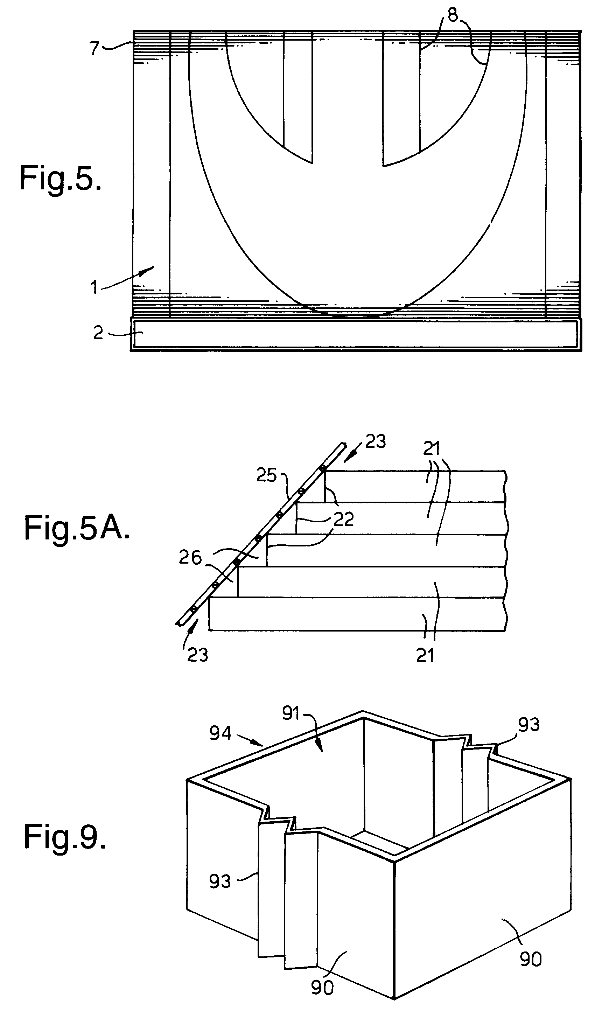

Figs. 4 and 5 illustrate the technique of LOM. Essentially, the technique involves exposing a sheet of plastic coated paper to a laser beam at selected points, whereby the paper is weakened at those points in accordance with a desired shape. A second sheet is then superposed on the first, and the process repeated with the additional feature of the two sheets becoming bonded together. As successive sheets are treated in the same way, there is built up a stack of laminated sheets with weak area contours so that, finally, the weakened areas can be removed to obtain the desired article.

Fig. 4 shows the process in operation. The laminated stack 1 is supported on a platform 2 which is incrementally moved downwards as each new sheet is added to the stack. Each sheet is cut (also by the laser) from a continuous roll 3 which is moved over the stack. The laser apparatus 4 is arranged to scan the working area 5 by use of movable mirrors 6 etc, controlled by computer. A heated roller 8 is moved over each new sheet to bond it to the underlying stack.

Fig. 5 shows the individual sheets 7 in the stack 1 with lines 8 of weakness built up by the laser.

Fig. 5A shows, in vertical section, an edge region of an LOM-generated support 20 comprising individual sheets 21 bonded together. Each sheet has been cut at its end 22 by the laser, to provide the desired shaped surface 23 of the support. The surface is, however, made up of a series of steps, each corresponding to the thickness of the end 22 of the respective sheet. A mesh 25 is laid on surface 23, and the steps provide lateral flow passages 26 between the mesh and the end surfaces of the sheets. These passages 26 can greatly assist in fluid flow during a pulp moulding process.

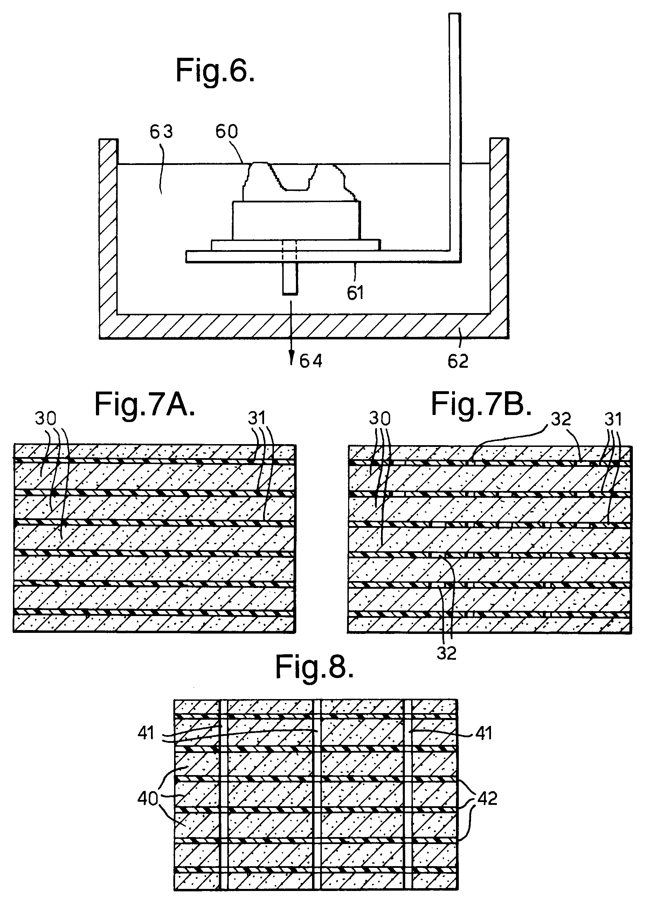

Fig. 6 schematically illustrates a pulp moulding process. The mould 60 comprising a support with mesh units mounted thereon is located on an elevator platform 61 for movement into and out of a pulp 63 in a bath 62. The mould 60 communicates with a vacuum source and a liquid drain 64 permits water drawn through the mesh to escape. When the desired thickness of solids has built up on the mesh mould, the moulded article is removed for oven drying.

One aspect of the present invention is the use of LOM for making a mesh support member. As previously described, the mesh can be generated by SLA or it may be conventional wire mesh.

In the methods of the invention, the mesh need not be made by SLA but be formed in other ways. For example, the "mesh" can be constituted by a sheet-like material with apertures therein. The apertures can be provided in any desired way, but according to a preferred feature of the invention the apertures are cut or drilled in the sheet-like material by laser.

There are various ways in which such a "mesh" can be provided on an LOM support. According to one preferred procedure, a thin sheet of plastic can be laid over an LOM support (preferably vacuum formed thereover) and then the sheet can be perforated with a laser to form fine mesh holes, for example about 1.0 mm diameter at 1.1 mm centres. The hole size and spacing can of course vary widely, as desired. Alternatively, the sheet could be perforated first and then applied to the LOM support. When the sheet is perforated on the support, the LOM laser can be used to make the perforations.

The concept of using a perforated sheet. especially (but not only) a perforated plastics sheet, to serve as a mesh, is itself novel and constitutes a further aspect of the invention. This aspect of the invention is useful particularly (but not exclusively) for making moulds for pulp moulding. The support is preferably made by LOM, but non-LOM supports can equally be used. The perforated sheet would have to be made to conform to the surface shape of the LOM (or other) support. It is thus preferred to shape the sheet on the support first before drilling the holes. Alternatively, a pre-drilled flat sheet could be formed to the support shape, eg. with a male or female tool, and then laid on the support.

Whilst we have described the invention with reference to stereolithography (SLA), it is to be understood that there are other similar techniques which could be used instead. Examples include wax processes which build up layers of wax and/or cure with light; welding and cutting type processes which build up the profile by layering and/or welding; printing type operations which can build up the profile by addition and/or subtraction of materials. The processes are generally in one of two categories, i.e. the addition of material (SLA type process) or subtraction of material (LOM type process).

The mesh structures made by SLA can be made in the form of a body such as shown in Figs. 3A and 3B of the accompanying drawings, or they can be made as thinner structures (e.g. from 1 to 10mm thick) to be supported such as on LOM produced supports or otherwise.

In the body shown in Figs. 3A and 3B, the apertures (1) extend uniformly from the top (3) to the bottom (4) of the unit. We have found that there are advantages in having the apertures taper or narrow from bottom to top. Thus, for example, there can be a top layer about 2mm thick having holes 0.75 x 0.75mm in size, then a layer 10mm thick having holes of size 1.5 x 1.5mm, then a layer with holes 3 x 3mm in size, and finally a bottom layer with holes 6 x 6mm in size. Thus, the top layer with fine holes is supported by the lower layers with larger holes, so effecting a saving in the amount of material used to make the unit.

The invention thus includes the use of a mesh unit in which the size of the mesh bores varies with their length. Such units can be made by SLA and other similar techniques. In use of these units for making pulp mouldings, control over the moulding thickness can be achieved by selective blocking or constricting of the larger lower regions of the holes. In this way, experiments can be conducted very simply and efficiently to test various mesh conditions in order to achieve exactly the desired properties in the pulp moulding. This is a highly advantageous technique.

It will be understood that whilst we prefer to have the holes widen from top to bottom of the mesh unit, more complex arrangements of varying hole size etc. can be achieved as desired by the SLA technique (and similar techniques).

The mesh size at the surface of the mesh unit affects the surface finish of the pulp mouldings made using it. Because of the flexibility of SLA (and similar techniques), mesh size can be varied relatively easily, thus allowing a desired surface finish to be achieved. This is not possible by conventional techniques.

Instead of using laminated object manufacture (LOM) to make the shaped mesh supports, it is possible to use other similar layer manufacturing techniques to make shaped articles. Examples of such other techniques include the wax processes and others described above as usable in place of SLA, and also any system which uses heat, light radiation to cure materials for subtraction and/or addition.

Shaped articles made by LOM are very advantageously used to support mesh (whether conventional wire mesh, or SLA-generated mesh, or any other mesh) for use in making the moulded pulp articles. The LOM support is formed with suction holes therein, and the mesh is mounted on a surface over the holes, so that water can be drawn from the pulp, through the mesh and out of the LOM support suction holes.

In making the pulp mouldings of the invention, the moulding thickness is varied so as to produce thinner (weaker) or thicker (stronger) areas, for example. This can be achieved without changing the mesh, by varying the suction holes in the support. Thus, using LOM (or a similar technique), it is possible to produce supports with various different suction hole arrangements, i.e. different spacings, different sizes, different shapes (e.g. different cross-sectional shapes) etc. It is also possible then to experiment by varying the liquid flow allowed in various suction holes, such as by temporarily occluding them, until exactly the right wall thickness is achieved in the pulp moulding. This possibility gives enormous advantages in practice.

We have referred herein to the use of paper pulps but other mouldable pulps and the like can also be used. For example, any fibre or particulate in a suspension medium, wet or dry, can be used. A microfine glass suspension is an example of a wet suspension. Dry suspensions include spray type applications to a mesh surface which employs suction through it.

In the manufacture of the pulp mouldings, the wet moulding has to be removed from the mould and stored to dry. There are sometimes problems in removing the wet moulding and transferring it to the drying station. We have found a way of dealing with this problem. According to the present invention, we smooth the surface of the pulp moulding whilst it is still on the wet mould, apply a release agent thereto (e.g. petroleum jelly) and then spray fibre glass/resin on to it to form a transfer mould. The transfer mould also has the usual vacuum line/air line.

The SLA meshes and LOM supports described herein, can be used as such or can be employed to make cast moulds therefrom, e.g. of metal or plastic, as desired.

Referring now to Figs. 7A and 7B, the shaped article for use as a mesh support comprises a plurality of porous laminae 30 (e.g. paper), bonded together with plastics layers 31. In the known construction of Fig. 7A, the plastic coatings are continuous and each lamina 30 is effectively sealed from adjacent laminae. In the result, the structure is porous only in the plane of individual laminae.

In Fig. 7B, however, the plastics layers 31 are discontinuous (as at 32), so that there is communication between adjacent laminae. Upon impregnation with a resin, the resin can permeate the whole structure effectively joining laminae together to make a very strong product.

Fig. 8 illustrates a support in which a non-porous material is used to make the laminae 40. The material is coated with an adhesive coating 42 and then perforated in a regular pattern, and the laminae 40 are then laid up with the perforations 41 on each lamina 40 coincident. The resulting product has inter-laminae porosity by virtue of the perforations 41.

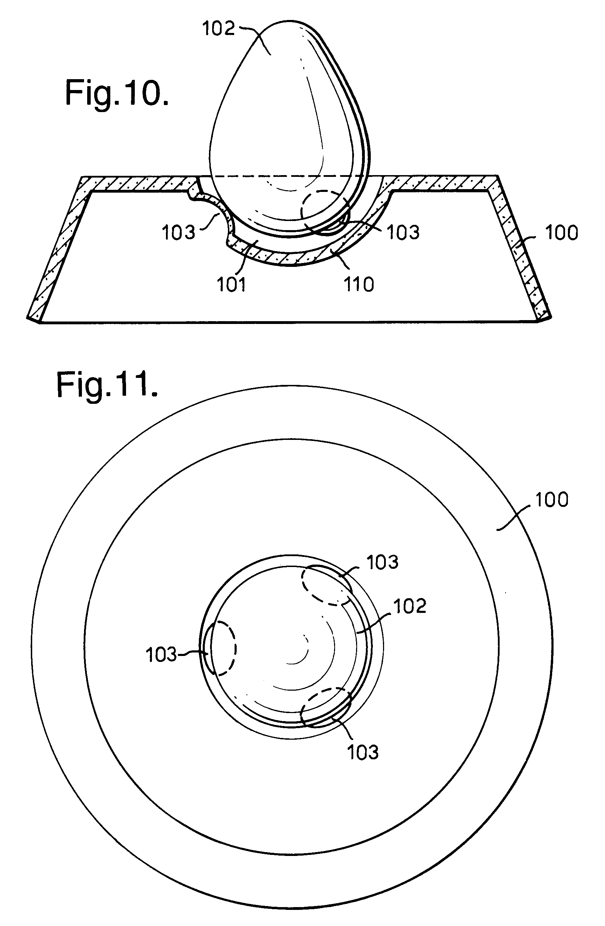

Fig. 9 is an orthogonal view of one embodiment of pulp moulding 94 of the invention. It comprises a rectangular section tube member having upstanding side walls 90 and open top 91 and bottom. The moulding can have planar or profiled inner surfaces 92 to bear against an article packaged therein.

The side walls are generally of uniform thickness (although they need not be) except for a region 93 in two opposed walls 90. Regions 93 are thinner than the remainder of the walls, and are formed in folded or fluted configuration. These regions, being thinner, collapse first in the event of the moulding being subjected to shock or strain above a predetermined minimum. In use of the moulding 94, the fluted regions 93 may initially contact the article to be packaged, or the thicker regions of walls 90 may initially contact the article.

Figs. 10, 11 and 12 relate to a pulp moulding of the invention which is useful for packaging an egg (or the like). The moulding is shown in relation to one egg only, but it may of course be used for packaging a plurality of eggs, each being received in a similar fashion to that illustrated. Referring to these Figures, there is shown a pulp moulding 100 which is generally of constant thickness, but which includes a generally hemispherical recess 101 for receiving an egg 102. Within the recess 101 are three upstanding egg supports 103 which (as shown) are thinner than the remainder of the moulding. These supports 103 initially contact and support the egg 102, but if any significant load is applied to the egg, they will collapse (due to their thinness) so that the egg is not harmed.

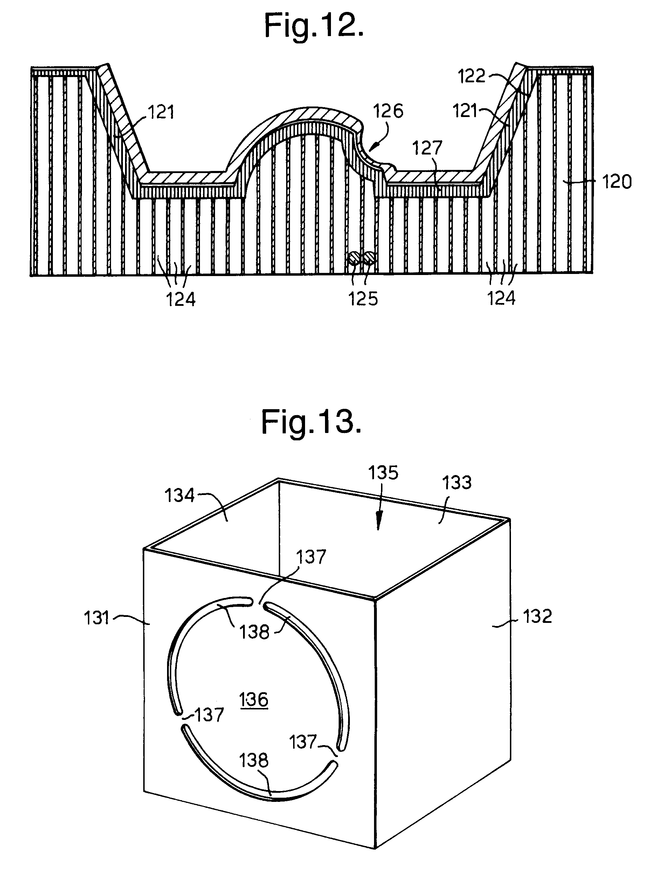

Fig. 12 illustrates one way of making the pulp moulding of Figs. 10 and 11. In Fig. 12, there is shown an LOM support 120 with a mesh 121 thereon closely conforming to, and being in contact with, the shaped upper surface 122 of the support 120. The support 120 has a plurality of drainage holes 124 extending from the mesh to carry water away during the pulp moulding process. Two of these holes, 124, are blocked at 125 to prevent water flow there through. The result of this is that the amount of pulp laid down on the mesh above these blocked holes 124, is much less than the amount of pulp elsewhere. Thus, thin pulp regions 126 are formed, and as can be seen these correspond to and form the supports 103 of Figs. 10 and 11.

The mesh 121 is an SLA generated mesh and contains fine holes 127.

Figs. 13 to 16 relate to another embodiment of pulp moulding of the invention, and its manufacture. Fig. 13 is an orthogonal view of the moulding 130. It comprises a rectangular open box shape, with four upstanding side walls 131, 132, 133 and 134. The bottom (not shown) is closed but the top 135 is open. The insides of the walls may be profiled or plane, as desired for packaging any particular article.

Side wall 131 comprises a central circular portion 136 which is joined to the remainder of the wall by three thin tabs 137, there being a gap 138 elsewhere between the periphery of portion 136 and the remainder of the wall 131. These thin tabs 137 can serve to release portion 136 in the event of accidental stress or strain being applied, or can be deliberately broken to release portion 136 for some other purpose. Thin tabs 137 can be initially in contact with the article packaged in the moulding, or (as is more usual) can be initially out of contact with the article.

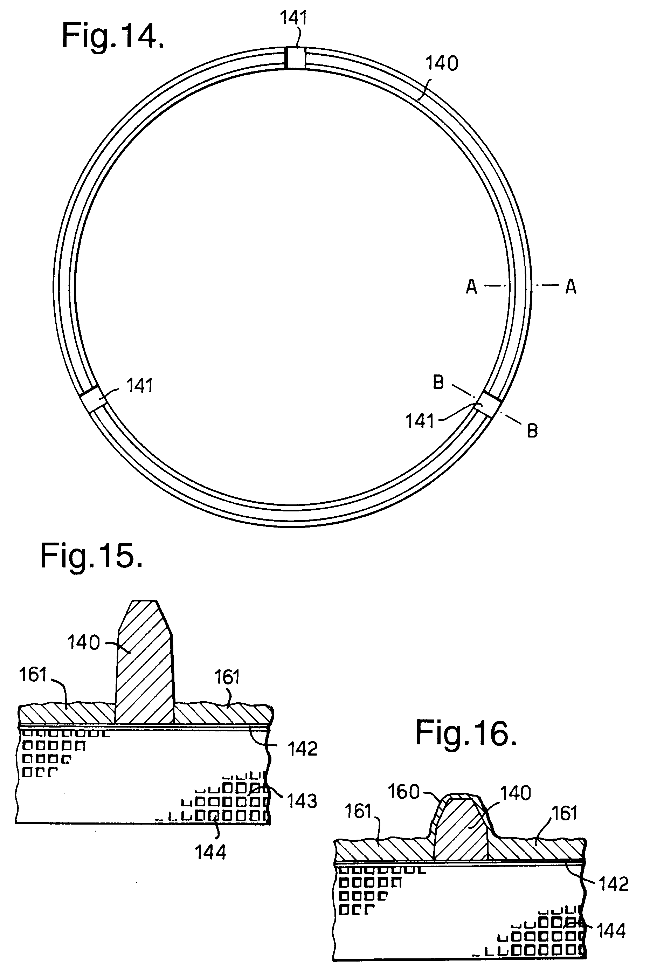

Figs. 14 to 16 illustrate a way of making wall 131. Fig. 14 is a plan view of part of the pulp moulding process. There is shown an upstanding ring 140 with three reduced regions 141. Fig. 15 is a section A-A of Fig. 14 and it can be seen that ring 140 rests on mesh 142 which is on a support 143. Support 143 has drainage holes 144 (as previously described). Ring 140 causes a discontinuity in the pulp laid down on the mesh, and the arcs of ring 140 between respective reduced regions 141 correspond to the arcuate gaps 138 in Fig. 13.

Fig. 16 is a section on the line B-B of Fig. 14. Here, the ring 140 is of reduced height, allowing the formation of a pulp layer 160 thereover. This layer 160 is, however, much thinner than the remainder of the pulp 161 laid down. The thin regions 160 correspond to the tabs 137 of Fig. 13.

In accordance with a preferred feature of the invention, LOM is used to make complex shapes to support meshes for use as moulds. A problem which can arise, however, is that the low bond strength between the laminae of the articles can result in the article having inadequate structural rigidity. According to a further aspect of this invention, we have found that this problem can be overcome by impregnating the LOM-generated article with a resin to strengthen it. The resin can not only provide structural reinforcement, but can also of course provide other properties such as heat resistance and/or water resistance.

In the known process for making articles by the LOM technique, the paper used has a continuous plastics coating to ensure overall adhesion to adjacent laminae in the product. We have found, however, that such coatings can form relatively impervious barriers against passage of impregnate resin in the article. Thus, the resin can be essentially restricted to individual laminae and not significantly bridge between adjacent laminae. We have found, according to a preferred feature of this invention, that this problem can be overcome by using plastic coated paper where the coating or the paper itself, is discontinuous in order to provide inter-laminae porosity in the LOM-generated article. This enables the impregnant resin to form a three-dimensional integral structure throughout the article, providing great strength if desired.

The paper can be made discontinuous by, for example, providing holes therein. The plastic coating can be made discontinuous by, for example, printing it onto the paper in a suitable pattern or by spraying it onto the paper without providing a continuous coating. The size of the holes or other discontinuities will usually be small so as not to affect significantly the inter-lamina bonding. The optimum arrangement can be found in any particular case by routine trial and experiment.

Instead of using paper or paper-like materials, in the LOM process, shaped articles can by built up from other sheet materials which can be suitably coated or impregnated with plastics material to provide the required bonding, Examples of such non-paper materials include plastics films, metal foils, woven and non-woven materials and ceramics. The plastics materials can be natural or synthetic, thermoplastic or thermosetting resins, depending on the physical and chemical properties required in the shaped article.

These materials will be coated (like the paper feedstock) and suitable coating materials to provide the necessary inter-lamina adhesion include low and high density polyethylene, polyurethanes, acrylics, phenolics, polyesters and case in, for example.

As will be clear to those skilled in the art, it may not always be necessary to provide an adhesive coating: sometimes, for example, surface treatment of a plastics sheet can provide the required bonding property.

The thickness of the paper, foil, ceramic, woven or non-woven materials will depend on the material itself and on the cutting power of the laser. Usually, they will have a thickness of about 0.05 to 1.0mm.

Articles made from porous sheet materials can be impregnated to strengthen them as described herein for the paper-based articles. Articles made from non-porous sheet materials are preferably made porous by first providing some porosity in the sheets themselves (and, if required, in any adhesive layer thereon). This can be achieved as previously described by providing holes in the sheets and/or discontinuities in any plastics coating (adhesive) applied thereto.

In the case of sheet materials which are essentially non-porous per se, e.g. metal foils or some plastics films, it is advantageous to provide discontinuities therein in a regular pattern on each sheet and to lay up the sheets in the laminate with the discontinuities directly super-posed to provide porosity throughout the article. This then enables any impregnant resin to permeate the article to provide the required structural integrity.

Impregnation of the supports of the invention is usually effected with a thermoplastic or thermosetting resin. Because of their three-dimensional porosity, as a result of resin impregnation, they can be made very strong. Furthermore, by judicious selection of the impregnating resin, other properties can be conferred. For the manufacture of certain moulds in particular, high heat transfer can be a desirable characteristic and this can be achieved by using an impregnating resin of good thermal transfer characteristics.

Impregnation of the shaped articles of the invention can be effected under vacuum and/or by immersion or spraying.

## Claims

1. A pulp moulding for packaging an article, the moulding having a surface for facing said article, the surface consisting of one or more first areas to make initial contact with the article, and one or more second areas out of initial contact with the article, and wherein at least one of said first areas comprises a region of different thickness from at least one of said second areas.

2. A pulp moulding according to claim 1, wherein the first area(s) include(s) regions of different thickness.

3. A pulp moulding according to claim 1 or 2, wherein the second area(s) include(s) regions of different thickness.

4. A pulp moulding according to claim 1,2 or 3, wherein the variation in thickness is at least 2:1.

5. A pulp moulding according to claim 1,2,3 or 4, wherein the thickness of the moulding is at constant moulding density.

6. A pulp moulding according to any of claims 1 to 5, wherein the thickness variations are in a regular pattern.

7. A pulp moulding according to any of claims 1 to 6, which is in the form of an open box.

8. A method of making a pulp moulding as claimed in claim 1, which comprises providing a mesh mould, feeding aqueous pulp to one side of the mould, applying reduced pressure to the other side of the mould to draw water through the mesh, and form a pulp moulding on the said one side of the mesh, characterised in that the mesh mould is so formed that the pulp moulding has the defined thickness variations therein.

9. A method according to claim 8, wherein the mesh mould comprises mesh on a support therefor.

10. A method according to claim 9, wherein the mesh is made by SLA.

11. A method according to claim 9 or 10, wherein the support is made by LOM.

12. A method according to claim 11, wherein the LOM support has been impregnated with a polymer.

13. A method according to claim 9, 10, 11 or 12, where in the dimensions of the mesh apertures vary in order to provide or contribute to the variations in thickness in the moulding.

14. A method according to claim 9,10,11,12 or 13, wherein the support includes water flow channels dimensioned and positioned to control the water drawn through the mesh to provide or contribute to the variations in thickness in the moulding.
